# EUROPÄISCHE PATENTSCHRIFT

(11) **EP 1 957 911 B1**
(45) Veröffentlichungstag und Bekanntmachung des Hinweises auf die Patenterteilung: **14.12.2011**
(21) Anmeldenummer: 06807334.5
(22) Anmeldetag: 17.10.2006
(51) Int. Cl.: F25D 23/12

(54) **HAUSHALTSGERÄT MIT WASSERFILTER**
DOMESTIC APPLIANCE WITH A WATER FILTER
APPAREIL MENAGER DOTE D'UN FILTRE A EAU

(30) Priorität: 30.11.2005 DE 102005057140
(43) Veröffentlichungstag der Anmeldung: 20.08.2008
(73) Patentinhaber: BSH Bosch und Siemens Hausgeräte GmbH, 81739 München (DE)
(72) Erfinder: NALBACH, Peter, 73230 Kirchheim/Nabern (DE)
(86) Internationale Anmeldenummer: PCT/EP2006/067485
(87) Internationale Veröffentlichungsnummer: WO 2007/062906

(56) Entgegenhaltungen:
- US-A1- 2001 023 843
- US-A1- 2001 052 896
- US-A1- 2002 189 983
- US-B2- 6 355 177

## Beschreibung

Die vorliegende Erfindung betrifft ein Haushaltsgerät, insbesondere ein Kältegerät, das in einer Wasserzufuhrleitung einen austauschbaren Wassefilter aufweist.

In vielen Ländern wird dem Leitungswasser Chlor zugesetzt, um eine Verkeimung zu verhindern, oder das Leitungswasser hat aus anderen Gründen einen vom Verbraucher als unangenehm empfundenen Geschmack. In solchen Ländern wird meist das zur Bereitung von Eiswürfeln für Getränke oder in anderer Weise für den unmittelbaren menschlichen Genuss vorgesehene Wasser gefiltert, z. B. mit Hilfe eines Aktivkohlefilters, um das Chlor oder allgemein die Trägerstoffe des unerwünschten Geschmacks oder Geruchs zu beseitigen. Derartige so genannte Adsorptionsfilter haben eine begrenzte Lebensdauer; ist diese überschritten, so ist eine Beseitigung der unerwünschten Stoffe nicht mehr gewährleistet, und anstatt Keime abzufangen, kann der Filter selber zum Nährboden für Keime werden. Es ist daher sowohl für den Komfort als auch für die Gesundheit der Verbraucher wichtig, dass der Abnutzungsgrad der Filter überwacht und dafür gesorgt wird, dass diese, wenn nötig, ausgetauscht werden.

Kältegeräte, bei denen einem eingebauten Eisbereiter oder einer Zapfstelle für gekühltes Wasser ein Wasserfilter vorgeschaltet ist, sind z. B. aus US 6 355 177 B2 und US 6 375 834 B1 bekannt. Bei diesen bekannten Geräten ist auch eine Überwachung des Abnutzungsgrads des Filters vorgesehen.

US 6 355 177 B2 schlägt vor, basierend auf einer bekannten Durchflussrate eines in einer Versorgungsleitung von Eisbereiter und Zapfstelle angeordneten Ventils die kumulierte Zeit zu erfassen, die dieses Ventil offen steht. Diese kumulierte Zeit wird mit der Durchflussrate des Ventils multipliziert, um einen kumulierten Durchsatz des Filters zu erhalten, und dieser wird mit einem spezifizierten Durchsatz verglichen, um abzuschätzen, ob der Filter abgenutzt ist oder nicht. Diese Verarbeitung erfordert eine exakte Zeitmessung und eine Vielzahl von Multiplikationen, um den Abnutzungsgrad des Filters zu beurteilen.

Bei dem aus US 6 613 236 B1 bekannten Kältegerät durchläuft ein Prozessor eine Endlosschleife, in der regelmäßig geprüft wird, ob ein Versorgungsventil in einer Wasserzufuhrleitung offen ist oder nicht. Wenn das Ventil offen ist, wird ein Wasserzähler um einen Wert inkrementiert, der dem Wasserdurchsatz des Ventils zwischen zwei Wiederholungen der Endlosschleife entspricht. Auch dieses System geht davon aus, dass die Durchflussrate des offenen Ventils im wesentlichen konstant ist, und auch die Dauer einer Schleife des Programms muss im wesentlichen konstant sein. Ein Mikroprozessor, der das Programm ausführt, muss es daher ständig oder zumindest mit hoher Priorität gegenüber anderen auszuführenden Programmen ausführen, um einen gleichbleibenden Zeitabstand zwischen zwei Wiederholungen zu gewährleisten. Die Überwachung des Filters belastet daher die Verarbeitungskapazität des Mikroprozessors erheblich.

Es wäre zwar denkbar, den Mikroprozessor zu entlasten, indem die Häufigkeit, mit der die Prüfung, ob das Ventil offen steht, durchgeführt wird, verringert wird, doch beeinträchtigt dies die Erfassungsgenauigkeit, zum einen, da die Gefahr, dass ein Öffnen des Ventils aufgrund kurzer Dauer unerfasst bleibt, um so größer ist, je größer der Zeitabstand zwischen zwei Überprüfungen ist, zum anderen, weil der Wert, um den der Wasserzähler jedes Mal inkrementiert werden muss, wenn festgestellt wird, dass das Ventil offen steht, um so größer gewählt werden muss, je größer der Zeitabstand zwischen zwei Überprüfungen ist. Ein Kältegerät gemäß dem Oberbegriff von Anspruch 1 ist aus US2001/052896 bekannt.
Aufgabe der vorliegenden Erfindung ist, ein Hausgerät mit austauschbarem Wasserfilter zu schaffen, bei dem eine genaue Erfassung des kumulierten Wasserdurchsatzes durch den Filter mit geringem Verarbeitungsaufwand auf Seiten der Überwachungsvorrichtung möglich ist.

Die Aufgabe wird gelöst durch ein Haushaltsgerät mit einer Wasserleitung, einem austauschbaren Wasserfilter und einem ersten Ventil, die in der Wasserleitung angeordnet sind, und einer Überwachungseinheit zum Berechnen eines für den Abnutzungsgrad des Wasserfilters repräsentativen Wertes, bei der die Überwachungseinheit einen repräsentativen Wert jeweils mit einer ersten Verzögerung nach dem Öffnen des ersten Ventils und, während das erste Ventil offen steht, in einem Zeitabstand, der größer als die Verzögerung ist, um eine erste gegebene Schrittweite inkrementiert.

Da die Überwachungseinheit nicht ständig überprüfen muss, ob das Ventil offen ist oder nicht, wird ihre Verarbeitungsleistung nur dann für die Überwachung des Abnutzungsgrades des Wasserfilters in Anspruch genommen, wenn das Ventil tatsächlich offen ist. In dieser im Vergleich zur Gesamtbetriebszeit des Haushaltsgerätes kurzen Zeit ist es nicht weiter problematisch, wenn die Überwachung des Wasserdurchsatzes einen erheblichen Anteil oder gar die gesamte Verarbeitungskapazität der Überwachungseinheit in Anspruch nimmt.

Wenn beim Öffnen des Ventils der repräsentative Wert sofort um die erste gegebene Schrittweite geändert würde, so entspräche dies einer sofortigen Erhöhung der von dem repräsentativen Wert repräsentierten Wassermenge bereits zum Zeitpunkt des Öffnens des Ventils, unabhängig davon, ob diese Wassermenge anschließend tatsächlich das Filter durchfließt oder nicht. Ein in dieser Weise erhaltener repräsentativer Wert wäre systematisch zu groß. Wenn umgekehrt vom Öffnen des Ventils bis zur ersten Inkrementierung des repräsentativen Wertes die gleiche Zeitspanne verstreichen müsste wie zwischen zwei aufeinanderfolgenden Inkrementierungen, so wäre der erfasste kumulierte Wasserdurchsatz systematisch zu niedrig. Diese systematischen Fehler können vermieden werden, wenn die erste Inkrementierung des repräsentativen Wertes nach Öffnen des Ventils mit einer Verzögerung ab dem Öffnungszeitpunkt erfolgt, die kleiner ist als der Zeitabstand zwischen späteren Inkrementierungen.

Wenn man annimmt, dass die jeweils bei einem Öffnen des Ventils abgezapften Wassermengen statistisch gleichmäßig verteilt sind, müsste der systematische Fehler verschwinden, wenn die Verzögerung halb so groß wie der Zeitabstand gewählt wird. In der Praxis liegt eine solche Gleichverteilung jedoch in der Regel nicht vor; wenn das Haushaltsgerät zum Beispiel ein Kühlschrank ist und die Wasserleitung eine Zapfstelle für gekühltes Trinkwasser dieses Kühlschrankes speist, wird die abgezapfte Wassermenge meist in etwa dem Fassungsvermögen eines an der Zapfstelle platzierten Behälters entsprechen. Es kann daher erforderlich sein, eine Verzögerung zu wählen, die nicht genau der Hälfte des Zeitabstandes entspricht, sondern einen Wert zwischen einem Viertel und drei Vierteln des Zeitabstandes haben kann, wobei der genaue Wert abhängig ist von der Größe der verwendeten Behälter einerseits und der durch ein Inkrement des repräsentativen Wertes repräsentierten Wassermenge.

Um den Einfluss der Behältergröße auf den systematischen Messfehler klein zu machen, sollte die von der Schrittweite repräsentierte Wassermenge kleiner sein als ein typischerweise zum Abzapfen verwendeter Behälter. Vorzugsweise entspricht die Schrittweite einer Wassermenge von nicht mehr als 0,2 I. Andererseits ist der Zuwachs an Messgenauigkeit, der erreichbar ist, wenn die von der Schrittweite repräsentierte Wassermenge kleiner gewählt wird als etwa ein Viertel oder Fünftel der typischen Behältergröße, gering, so dass man die Schrittweite vorzugsweise entsprechend einer Wassermenge von wenigstens 0,02 I wählen wird.

An die Wasserleitung kann ferner ein über ein zweites Ventil gespeister Eisbereiter angeschlossen sein.

Um die Menge des in den Eisbereiter eingefüllten Wassers zu steuern, ist dem zweiten Ventil vorzugsweise ein Zeitgeber zum Schließen des zweiten Ventils nach einer vorgegebenen Zeitspanne des Offenstehens zugeordnet.

Alternativ kann der Eisbereiter auch mit einem Füllstandsmesser versehen sein, und das zweite Ventil ist eingerichtet, zu schließen, wenn der Füllstandsmesser einen gegebenen Füllstand des Eisbereiters anzeigt.

Bei einem solchen Haushaltsgerät mit Eisbereiter inkrementiert die Überwachungseinheit den repräsentativen Wert vorzugsweise bei jedem Öffnen des zweiten Ventils um eine zweite gegebene Schrittweite, die von der ersten Schrittweite verschieden sein kann, wobei es ohne Bedeutung ist, zu welchem Zeitpunkt in Bezug auf den Zeitpunkt des Öffnens des zweiten Ventils die Inkrementierung erfolgt.

Um eine einheitliche Bewertung des Wasserdurchsatzes durch die zwei Ventile zu erreichen, sollte das Produkt aus der Durchflussrate des ersten Ventils, Zeitabstand und zweiter gegebener Schrittweite gleich dem Produkt aus Füllmenge des Eisbereiters und erster gegebener Schrittweite sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung einer kombinierten Anordnung von Wasserzapfstelle und Eisbereiter;
- Fig. 2: eine Häufigkeitsverteilung der an der Zapfstelle abgezapften Wassermengen bzw. der Öffnungsdauern des zugeordneten Ventils im Verhältnis zum Zeitabstand zwischen zwei Inkrementierungen des Zählers; und
- Fig. 3: ein zu Fig. 2 analoges Diagramm im Fall eines vergrößerten Zeitabstandes.

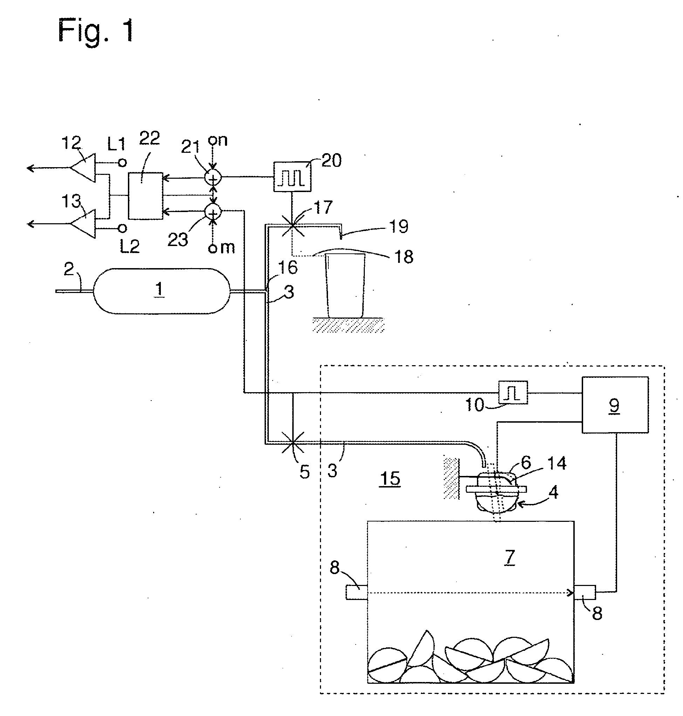

Fig. 1 ist eine schematische Darstellung einer in einem Kühlschrank eingebauten Anordnung aus einer Wasserzapfstelle und einem Eisbereiter. Ein austauschbarer Wasserfilter 1 ist in einem Sockelbereich des Kühlschranks untergebracht. Ein Eingangsanschluss des Filters 1 ist über eine Leitung 2 an eine Gebäudewasserleitung angeschlossen. Eine Leitung 3 führt von einem Ausgangsanschluss des Wasserfilters 1 zu einer Eisschale 4 des Eisbereiters 15. In der Leitung 3 ist ein Ventil 5 angeordnet, das den Wasserzufluss zum Eisbereiter 15 kontrolliert.

Die Eisschale 4 hat die Gestalt eines Zylindersegments, dessen Längsachse sich quer zur Zeichnungsebene der Fig. 1 erstreckt und das durch quer zur Längsachse orientierte Trennwände in eine Vielzahl von Fächern unterteilt ist. Die Eisschale 4 ist mit Hilfe eines Motors 6 um die Längsachse drehbar. Die in der Fig. mit durchgezogene Linien dargestellte Stellung der Eisschale 4 ist eine Gefrierstellung, in der die Trennwände über den Wasserspiegel in den Fächern der Eisschale hinausragen, so dass voneinander getrennte Eisstücke erhalten werden. Die Schale kann ferner zeitweilig eine leicht gekippte Ausgleichsstellung einnehmen, in welcher eingefülltes Wasser die Trennwände auf einem Teil ihrer Breite überspült, so dass ein Ausgleich des Wasserstandes zwischen den Fächern möglich ist. In einer in der Fig. als gestrichelter Umriss gezeigten, stark gekippten Stellung werden die fertigen Eisstücke durch über der Schale 4 angebrachte Finger 14 aus der Schale 4 herausgestoßen und fallen in einen darunter liegenden Vorratsbehälter 7, wo sie von einem Benutzer nach Bedarf entnommen werden können.

Am Vorratsbehälter 7 ist eine Lichtschranke 8 oder ein ähnlicher Typ von Füllstandssensor angeordnet, der dazu dient, einen unzureichenden Füllstand des Vorratsbehälters 7 einer Steuerschaltung 9 zu signalisieren. Wenn dies geschieht, gibt die Steuerschaltung 9 einen Impuls an eine monostabile Kippstufe 10 und einen Addierer 23 aus. Die Kippstufe 10 liefert daraufhin einen Impuls einer festen, herstellerseitig eingestellten Dauer an das Ventil 5. Solange der Impuls anliegt, ist das Ventil 5 offen, und Wasser fließt durch den Filter 1 und die Leitung 3 in die Eisschale 4. Die Dauer des Ausgangsimpulses der Kippstufe 10 ist in Abhängigkeit von einer spezifizierten Durchflussrate des Ventils 5 so bemessen, dass eine zum Füllen der Fächer der Eisschale 4 ausreichende Wassermenge zudosiert wird.

Nach dem Befüllen der Eisschale 4 dreht die Steuerschaltung 9 die Eisschale 4 zunächst kurzzeitig in die Ausgleichsstellung und dann zurück in die gezeigte Stellung. In dieser bleibt die Eisschale 4 für eine an der Steuerschaltung 9 voreingestellte, zum Gefrieren des Wassers in der Schale 4 ausreichende Zeit. Anschließend werden die fertigen Eisstücke ausgeworfen, und wenn die Lichtschranke 8 weiterhin einen unzureichenden Füllstand signalisiert, wiederholt sich der Vorgang.

In der Leitung 3 ist zwischen dem Wasserfilter 1 und dem Ventil 5 des Eisbereiters eine Verzweigung 16 gebildet, die über ein zweites Ventil 17 eine Zapfstelle 19 versorgt. Das Ventil 17 ist in an sich bekannter Weise durch einen Hebel 18 gesteuert, der durch Platzieren eines Bechers oder dergleichen an der Zapfstelle 19 betätigt wird. Durch Öffnen des Ventils 17 wird ein Oszillator 20 in Gang gesetzt, der ein Rechtecksignal liefert, in welchem sich niedrige und hohe Signalpegel jeweils mit gleicher Dauer t abwechseln.

Für die Zwecke der vorliegenden Beschreibung wird angenommen, dass der Oszillator 20 nach Ingangsetzen durch das Ventil 17 zunächst einen niedrigen Pegel mit der Dauer t liefert. Diese Festlegung ist jedoch rein willkürlich; die nachfolgend beschriebene Funktionsweise des dargestellten Systems ist selbstverständlich in gleichwertige Weise auch realisierbar, wenn der Oszillator 20 zunächst einen hohen Signalpegel liefert.

Eine ansteigende Flanke des Signals vom Oszillator 20, in einem Zeitabstand t nach dem Öffnen des Ventils 17, triggert einen Addierer 21, an dessen zwei Dateneingängen ein fester ganzzahliger Wert n bzw. der aktuelle Inhalt eines Registers 22 anliegen. Der Ausgang des Addieres 21 ist an einen Eingang des Registers 22 angeschlossen, um den um n inkrementierten Registerinhalt in das Register 22 zurückzuschreiben.

Der Addierer 21 wird durch jede weitere ansteigende Flanke des Oszillatorsignals getriggert, so dass das Register jeweils zu Zeiten t, 3t, 5t, etc. inkrementiert wird, solange das Ventil 17 offen ist.

Ein zweiter Addierer 23 empfängt ein Triggersignal vom Eisbereiter-Block 15, das, wie in der Fig. gezeigt, dasselbe Signal sein kann, welches auch das Ventil 5 steuert, das aber auch das Eingangssignal der Kippstufe 10 sein könnte. Die Eingänge des Addierers 23 sind mit dem Inhalt des Registers 22 bzw. einem festen Wert m beschaltet; der Ausgang des Addierers 23 ist wiederum an einen Eingang des Registers 22 angeschlossen, um den um m inkrementierten Registerinhalt in das Register 22 zurückzuschreiben.

Das Verhältnis der Inkrementwerte n/m ist entsprechend dem Verhältnis des Wasserdurchsatzes des Ventils 17 in der Zeitspanne 2t zur Füllmenge des Eisschale 4 gewählt. Wenn z. B. die Füllmenge der Eisschale 0,2 I beträgt und m=5 ist, so entspricht jede Erhöhung des Inhalts des Registers 22 um 1 einem Wasserdurchsatz des Filters 1 von 40 cm³. Bei einer exemplarisch angenommenen Durchflussrate des. Ventils 17 von 240 cm³/Minute müsste folglich, wenn das Ventil 17 offen ist, das Register 22 mit einer Geschwindigkeit von 6/Minute inkrementiert werden. D.h., es kann z. B. n=1 und t=5 Sekunden gesetzt werden.

Der Inhalt des Registers 22 ist ein Maß für den kumulierten Wasserdurchsatz des Filters 1.

Komparatoren 12, 13 sind an den Ausgang des Registers 22 angeschlossen, um dessen Inhalt mit zwei Grenzwerten L1, L2 zu vergleichen. Überschreitet der Inhalt den kleineren der zwei Grenzwerte, L1, so liefert der Komparator 12 ein Ausgangssignal, das eine nicht dargestellte Anzeige am Gehäuse des Kühlschranks aktiviert, um einen Benutzer davon in Kenntnis zu setzen, dass die Kapazität des Wasserfilters 1 nahezu erschöpft ist und dass ein Ersatz für den Filter beschafft werden sollte. Überschreitet der Inhalt auch den größeren Grenzwert L2, so liefert der Komparator 13 ein zweites Signal, das am Gehäuse des Kühlschranks angezeigt wird, um den Benutzer davon in Kenntnis zu setzen, dass die Kapazität des Filters erschöpft ist.

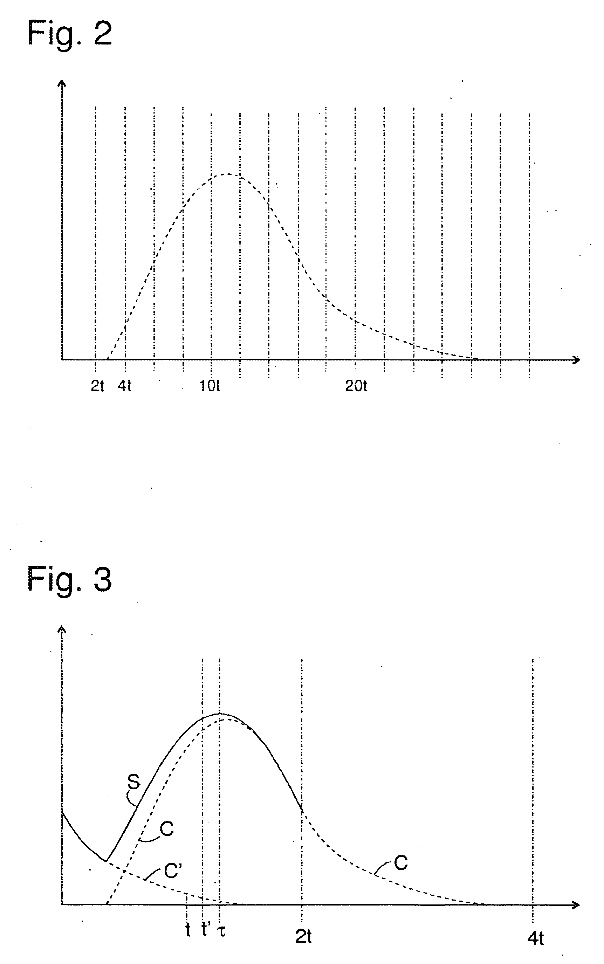

Fig. 2. zeigt in einem Diagramm eine exemplarische Häufigkeitsverteilung der Öffnungszeitdauern des Ventils 17. Die gezeigte Verteilungskurve hat ein Maximum bei einer Zeitdauer, hier von ca. 11 t, die zum Beispiel der typischen Einfüllmenge eines Trinkglases entspricht. Wenn das Ventil 17 über mehrere Zeitintervalle der Dauer 2 t hinweg offen bleibt, so ist es für diese Zeitintervalle ohne Belang, wann in ihnen das Offenstehen des Ventils 17 erfasst und das Register 22 inkrementiert wird. Lediglich in den Zeitintervallen, in denen das Ventil 17 schließt, kann es zu einem vom Zeitpunkt der Erfassung abhängigen systematischen Fehler kommen. Die Wahrscheinlichkeitsverteilung für den Schließzeitpunkt des Ventils 17 im letzten Zeitintervall des Offenstehens des Ventils kann abgeleitet werden durch Zerlegen der Verteilungskurve der Fig. 3 in jeweils den Zeitintervallen 0 bis 2t, 2t bis 4t, 4t bis 6t etc. entsprechende Segmente, Übereinanderlegen und Aufaddieren dieser Segmente. Da sowohl ansteigende als auch abfallende Segmente aufaddiert werden, neigt die dadurch erhaltene Wahrscheinlichkeitsverteilung des Schließzeitpunktes des Ventils in einem Zeitraum 0 bis 2t dazu, nur wenig im Zeitverlauf zu variieren. Sie ist um so exakter gleichverteilt, je kleiner t gewählt ist. Wenn zum Befüllen eines typischen Glases also eine Öffnungszeitdauer des Ventils von mehreren 2t erforderlich ist, so sind systematische Messfehler, die sich ergeben, wenn der Zustand offen oder geschlossen des Ventils jeweils zu Zeiten t, 3t, 5t etc. nach dem Öffnen des Ventils erfasst wird, vernachlässigbar.

Fig. 3 zeigt den Fall, dass die Zeitspanne 2t länger ist als die wahrscheinlichste Abzapfdauer τ. Ein Segment der gestrichelt dargestellten Verteilungskurve C, das dem Zeitintervall 2t bis 4t entspricht, ist in das Intervall 0 bis 2t verschoben und dort mit C' bezeichnet. Die durch Aufsummieren des Segments C' und der Kurve C im Zeitintervall 0 bis 2t erhaltene Verteilungskurve ist mit S bezeichnet. Das Integral von S von 0 bis 2t ist auf 1 normiert; ein Zeitpunkt t', für den das Integral von S von 0 bis t' genau 1/2 ist, ist der ideale Zeitpunkt zum Erfassen des Offenstehens des Ventils 17, der eine Durchsatzmessung ohne systematische Fehler erlaubt. Wie man sieht, ist die Differenz zwischen t und t' nicht groß. Durch empirische Ermittlung der Verteilungskurve C ist es möglich, t' exakt zu bestimmen und die Prüfung auf Offenstehen des Ventils jeweils exakt mit der optimalen Verzögerung t' vorzunehmen; alternativ ist es möglich, die Verzögerung exakt gleich t zu wählen und den damit verbundenen kleinen systematischen Fehler hinzunehmen.

Die mit Bezug auf Fig. 1 als diskrete Schaltungsteile beschriebenen Elemente wie etwa Steuerschaltung, Register, Addierer, Komparatoren etc. können selbstverständlich auch durch eine programmgesteuerte Schaltung realisiert sein. Eine solche programmgesteuerte Schaltung würde nur in Zeiten, wo ein Ventil 5 oder 17 offen ist, tatsächlich zur Überwachung des Wasserdurchsatzes durch das Filter 1 benötigt; während des bei weitem überwiegenden Teils der Betriebszeit des Kältegeräts kann sie für andere Aufgaben ohne Einschränkung zur Verfügung stehen.

## Patentansprüche

1. Haushaltsgerät mit einer Wasserleitung (2, 3), einem austauschbaren Wasserfilter (1) und einem ersten Ventil (17), die in der Wasserleitung (2, 3) angeordnet sind, und einer Überwachungseinheit (9, 10, 12, 13, 21, 22, 23) zum Berechnen eines für den Abnutzungsgrad des Wasserfilters (1) repräsentativen Werts, **dadurch gekennzeichnet, dass** die Überwachungseinheit (9, 10, 12, 13, 21, 22, 23) den repräsentativen Wert jeweils mit einer ersten Verzögerung (t) nach dem Öffnen des ersten Ventils (17) und, während das erste Ventil (17) offen steht, in einem Zeitabstand (2t), der größer als die Verzögerung (t) ist, um eine erste gegebene Schrittweite (n) inkrementiert.

2. Haushaltsgerät nach Anspruch 1, **dadurch gekennzeichnet, dass** die Verzögerung (t) zwischen einem und drei Vierteln des Zeitabstandes (2t) beträgt.

3. Haushaltsgerät nach Anspruch 1, **dadurch gekennzeichnet, dass** das erste Ventil (17) eine Zapfstelle (19) für gekühltes Trinkwasser speist.

4. Haushaltsgerät nach einem der vorhergehenden Ansprüche, **dadurch gekennzeichnet, dass** es einen über ein zweites Ventil (5) gespeisten Eisbereiter (15) aufweist.

5. Haushaltsgerät nach Anspruch 4, **dadurch gekennzeichnet, dass** dem zweiten Ventil (5) ein Zeitgeber (10) zum Schließen des zweiten Ventils (5) nach einer vorgegebenen Zeitspanne des Offenstehens zugeordnet ist.

6. Haushaltsgerät nach Anspruch 4, **dadurch gekennzeichnet, dass** der Eisbereiter einen Füllstandsmesser aufweist und das zweite- Ventil eingerichtet ist, zu schließen, wenn der Füllstandsmesser einen gegebenen Füllstand des Eisbereiters anzeigt.

7. Haushaltsgerät nach Anspruch 4, 5 oder 6, **dadurch gekennzeichnet, dass** die Überwachungseinheit (9, 10, 12, 13, 21, 22, 23) den repräsentativen Wert bei jedem Öffnen des zweiten Ventils (5) um eine zweite gegebene Schrittweite (m) inkrementiert.

8. Haushaltsgerät nach einem der Ansprüche 4 bis 7, **dadurch gekennzeichnet, dass** das Produkt aus Durchflussrate des ersten Ventils, Zeitabstand (2t) und zweiter gegebener Schrittweite (m) gleich dem Produkt aus Füllmenge des Eisbereiters (15) und erster gegebener Schrittweite (n) ist.

## Claims

1. Domestic appliance with a water duct (2, 3), an exchangeable water filter (1) and a first valve (17), which is arranged in the water duct (2, 3), and a monitoring unit (9, 10, 12, 13, 21, 22, 23) for calculating a value representative of the extent of exhaustion of the water filter (1), **characterised in that** the monitoring unit (9, 10, 12, 13, 21, 22, 23) increments the representative value by a first given step width (n) each time with a first delay (t) after the opening of the first valve (17) and, while the first valve (17) is open, at a time interval (2t) greater than the delay (t).

2. Domestic appliance according to claim 1, **characterised in that** the delay (t) is between one quarter and three quarters of the time interval (2t).

3. Domestic appliance according to claim 1, **characterised in that** the first valve (17) supplies an extraction point (19) for cooled drinking water.

4. Domestic appliance according to any one of the preceding claims, **characterised in that** it comprises an ice-maker (15) supplied by way of a second valve (5).

5. Domestic appliance according to claim 4, **characterised in that** a time transmitter (10) for closing the second valve (5) after a predetermined time period of remaining open is associated with the second valve (5).

6. Domestic appliance according to claim 4, **characterised in that** the ice-maker has a filling state meter and the second valve is arranged to close when the filling state meter indicates a given filling state of the ice-maker.

7. Domestic appliance according to claim 4, 5 or 6, **characterised in that** the monitoring unit (9, 10, 12, 13, 21, 22, 23) increments the representative value by a second given step width (n) on each occasion of opening of the second valve (5).

8. Domestic appliance according to any one of claims 4 to 7, **characterised in that** the product of throughflow rate of the first valve, time interval (2t) and second given step width (m) is equal to the product of filling quantity of the ice-maker (15) and first given step width (n).

## Revendications

1. Appareil ménager comprenant une conduite d'eau (2, 3), un filtre à eau interchangeable (1) et une première soupape (17), qui sont disposés dans la conduite d'eau (2, 3), et une unité de contrôle (9, 10, 12, 13, 21, 22, 23) destinée à calculer une valeur représentative pour le degré d'usure du filtre à eau (1), **caractérisé en ce que** l'unité de contrôle (9, 10, 12, 13, 21, 22, 23) incrémente la valeur représentative d'un premier pas de progression (n) donné respectivement avec un premier retard (I) après l'ouverture de la première soupape (17) et, pendant que la première soupape (17) est ouverte, dans un intervalle de temps (2t) qui est plus grand que le retard (t).

2. Appareil ménager selon la revendication 1, **caractérisé en ce que** le retard (t) est entre un et trois quarts de l'intervalle de temps (2t).

3. Appareil ménager selon la revendication 1, **caractérisé en ce que** la première soupape (17) alimente un point de prélèvement (19) pour de l'eau potable refroidie.

4. Appareil ménager selon l'une quelconque des revendications précédentes, **caractérisé en ce qu'**il présente un préparateur de glace (15) alimenté par l'intermédiaire d'une deuxième soupape (5).

5. Appareil ménager selon la revendication 4, **caractérisé en ce qu'**un générateur de rythme (10) est attribué à la deuxième soupape (5) pour fermer la deuxième soupape (5) après une période de temps prédéterminée de l'ouverture.

6. Appareil ménager selon la revendication 4, **caractérisé en ce que** le préparateur de glace présente un mesureur de niveau et **en ce que** la deuxième soupape est réglée pour se fermer lorsque le mesureur de niveau indique un niveau de remplissage donné du préparateur de glace.

7. Appareil ménager selon les revendications 4, 5 ou 6, **caractérisé en ce que** l'unité de contrôle (9, 10, 12, 13, 21, 22, 23) incrémente la valeur représentative d'un deuxième pas de progression (m) donné lors de chaque ouverture de la deuxième soupape (5).

8. Appareil ménager selon l'une quelconque des revendications 4 à 7, **caractérisé en ce que** le produit du débit de la première soupape, de l'écart de temps (2t) et du deuxième pas de progression donné (m) est égal au produit de la quantité de remplissage du préparateur de glace (15) et du premier pas de progression donné (n).
